# EUROPÄISCHE PATENTSCHRIFT

(11) **EP 2 882 563 B1**
(45) Veröffentlichungstag und Bekanntmachung des Hinweises auf die Patenterteilung: **28.07.2021**
(21) Anmeldenummer: 13755981.1
(22) Anmeldetag: 09.08.2013
(51) Int. Cl.: B23K 26/06, B23K 26/00, B23K 26/08, B23K 26/03, H01S 3/067

(54) **ANORDNUNG ZUM BEARBEITEN VON WERKSTÜCKEN MIT EINEM LASERSTRAHL**
ASSEMBLY FOR PROCESSING WORKPIECES BY MEANS OF A LASER BEAM
SYSTÈME D'USINAGE DE PIÈCES AU MOYEN D'UN RAYON LASER

(30) Priorität: 09.08.2012 EP 12179826
(43) Veröffentlichungstag der Anmeldung: 17.06.2015
(73) Patentinhaber: Rofin-Lasag AG, 3602 Thun (CH)
(72) Erfinder: RÜTTIMANN, Christoph, CH-3600 Thun (CH); DÜRR, Ulrich, CH-3608 Allmendingen (CH); BARTLOME, Richard, CH-1197 Prangins (CH)
(74) Vertreter: Schlögl, Markus
(86) Internationale Anmeldenummer: PCT/EP2013/066723
(87) Internationale Veröffentlichungsnummer: WO 2014/023828

(56) Entgegenhaltungen:
- GB-A- 2 482 867
- US-A- 5 627 848
- US-A- 5 701 319
- US-A1- 2005 194 365
- US-A1- 2008 058 780
- US-A1- 2009 046 746
- US-B1- 7 733 922
- None

## Beschreibung

Die Erfindung bezieht sich auf eine Anordnung zum Bearbeiten, insbesondere zum Schweißen eines Werkstückes mit einem Laserstrahl.

Das Bearbeiten - Bohren, Trennen oder Schweißen - von Werkstücken mit einem Laserstrahl ist mit einer Vielzahl von technischen Vorteilen verbunden, zu denen unter anderem ein gegenüber anderen Bearbeitungsverfahren reduzierter Wärmeeintrag sowie die Möglichkeit zählen, Bearbeitungen an schwer zugänglichen Stellen durchführen und insbesondere Schweißnähte mit komplexen Nahtkonturen erzeugen zu können. Schwierigkeiten bereitet jedoch die Bearbeitung hochreflektierender Werkstücke, wie beispielsweise Kupfer oder Aluminium sowie anderer hochreflektierender Materialien in der Elektronik-, Medizin- oder Schmuckindustrie.

US 7,733,922 B1 beschreibt eine Anordnung zur Bearbeitung eines Werkstückes mit einem Laserstrahl. Hierzu kommt ein Faserlaser zum Einsatz, der einen gepulsten primären Laserstrahl mit einer Bandbreite von weniger als 0,3nm erzeugt.

Der Erfindung liegt daher die Aufgabe zugrunde, eine Anordnung zum Bearbeiten eines Werkstückes mit einem Laserstrahl anzugeben, die insbesondere zum Bearbeiten hochreflektierender Werkstücke, insbesondere hochreflektierender metallischer Werkstücke geeignet ist.

Die genannte Aufgabe wird gemäß der Erfindung gelöst mit einer Anordnung mit den Merkmalen des Patentanspruches 1. Gemäß diesen Merkmalen umfasst die Anordnung zum Bearbeiten eines Werkstückes mit einem Laserstrahl, insbesondere zum Bearbeiten eines hochreflektierenden Werkstückes, einen Faserlaser als Laserstrahlquelle zum Erzeugen eines gepulsten primären Laserstrahls mit einer Bandbreite, die kleiner als 1nm ist.

Gemäß der Erfindung ist eine Einrichtung zum Auskoppeln und Detektieren einer vom Werkstück axial ausgehenden Strahlung vorgesehen.

Hierzu umfasst die feste oder bewegliche Ablenkoptik in einer ersten Alternative einen Umlenkspiegel, der schmalbandig hochreflektierend für den primären und den oder die sekundären Laserstrahlen ist und der für eine vom Werkstück ausgehende Plasma- und Wärmestrahlung durchlässig ist.

Gemäß einer zweiten Alternative kann die vom Werkstück axial ausgehende Strahlung über einen faseroptischen Strahlteiler aus einer Transportfaser ausgekoppelt werden.

Der Faserlaser erzeugt vorzugsweise einen linearpolarisierten primären Laserstrahl.

Insbesondere ist der Faserlaser ein Single-Mode- oder ein Niedermoden-Faserlaser.

In einer weiteren Ausgestaltung der Erfindung ist der Faserlaser ein qcw-Faserlaser.

Wenn im Strahlengang des primären Laserstrahls ein Frequenzvervielfacher-Modul zum Erzeugen wenigstens eines frequenzvervielfachten sekundären Laserstrahls angeordnet ist, wird die Absorption verbessert und die Bearbeitungsqualität und Reproduzierbarkeit bei hochreflektierenden Werkstücken signifikant verbessert.

Insbesondere ist im Strahlengang der aus dem Frequenzvervielfacher-Modul austretenden Laserstrahlen ein optisches Abgleichmodul angeordnet, mit dem die Intensität des verbleibenden, d.h. im Frequenzvervielfacher-Modul nicht in einen Laserstrahl mit vervielfachter Frequenz umgewandelten primären Laserstrahls relativ zur Intensität des oder der sekundären Laserstrahlen einstellbar, um die Gesamt-Strahlungsenergie an die Bearbeitungsgeometrie (z.B. Schweißtiefe) anpassen zu können und insbesondere beim Schweißen die Bildung von Spritzern zu unterdrücken.

In einer weiteren vorteilhaften Ausgestaltung der Erfindung ist dem Frequenzvervielfacher-Modul ein Zirkularpolarisator nachgeschaltet. Auf diese Weise können Effekte vermieden werden, die durch eine Abhängigkeit der Absorptionseigenschaften des Werkstücks von der Polarisationsrichtung eines linearpolarisierten Laserstrahls entstehen können.

In einer weiteren bevorzugten Ausführungsform sind zum Führen der Laserstrahlen eine oder eine Mehrzahl von Transportfasern vorgesehen, wobei alle Transportfasern einen Kerndurchmesser aufweisen, der größer als 15µm ist. Mit einer solchen Transportfaser ist die Einkopplung der Laserstrahlen erleichtert. Außerdem bleibt die Strahlqualität erhalten und es werden nichtlineare Effekte unterdrückt.

Insbesondere umfasst die Anordnung einen Bearbeitungskopf, der eine Kollimatoreinrichtung, eine Ablenkoptik und eine Fokussieroptik zum Fokussieren des oder der Laserstrahlen auf das Werkstück umfasst.

Vorzugsweise bestehen die im Strahlengang der Laserstrahlen befindlichen optischen Komponenten aus Quarzglas.

Wenn die vom Werkstück ausgehende Strahlung in einer Signalverarbeitungseinheit analysiert und auf der Grundlage dieser Analyse Steuersignale zur Steuerung des Bearbeitungsprozesses erzeugt werden, kann die Bearbeitungsqualität kontrolliert und durch Anpassung der zur Bearbeitung benutzten Laserstrahlen signifikant verbessert werden. Bei dieser vom Werkstück ausgehenden Strahlung kann es sich um reflektierte Laserstrahlung, von der in der Bearbeitungszone ausgehende Wärme- oder von einem in der Bearbeitungszone gebildeten Plasma ausgehende Plasmastrahlung handeln, wobei insbesondere die Form eines Einzelpulses als auch die Form eines Pulszuges der vom Werkstück ausgehenden Strahlung zur Analyse herangezogen werden.

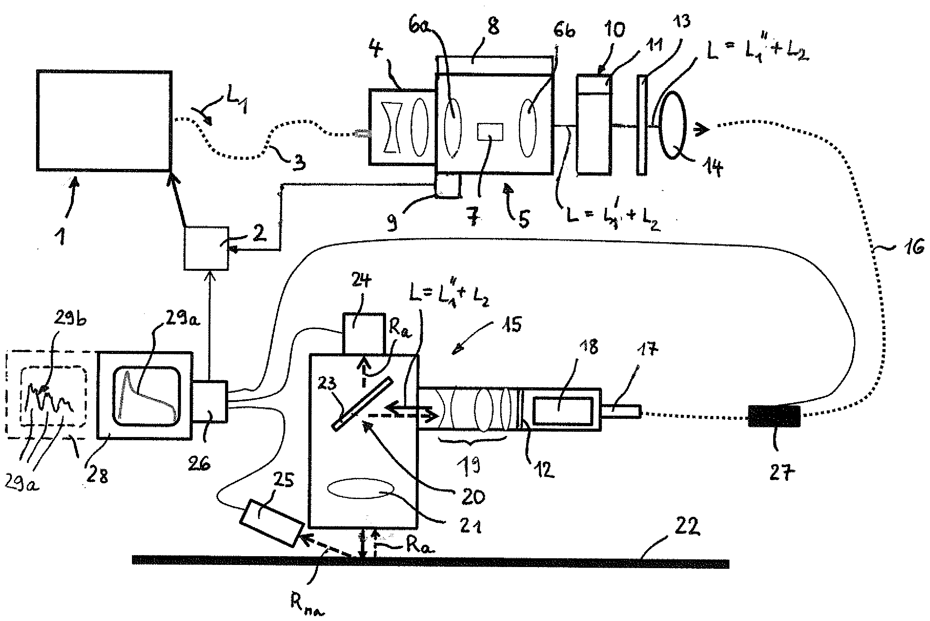

Zur näheren Erläuterung der Erfindung wird auf die Zeichnung verwiesen, in deren einziger Figur ein Ausführungsbeispiel einer erfindungsgemäßen Anordnung schematisch dargestellt ist.

Gemäß dieser Figur umfasst die Anordnung einen Faserlaser 1, vorzugsweise ein qcw- oder modulierter cw-Faserlaser mit Strahlung im nahen Infrarot (1-2µm), der dazu eingerichtet ist, einen in einem Einfachmode (singlemode) oder einem Mehrfachmode (multimode) mit niedriger Modenzahl vorliegenden quasikontinuierlichen, bevorzugt linearpolarisierten primären Laserstrahl L₁ zu erzeugen, der eine Bandbreite aufweist, die kleiner als 1nm ist, und dessen Pulsdauer zwischen 10µs und 50ms beträgt. Der Faserlaser 1 kann sowohl im Einzelpulsbetrieb als auch mit einer Pulsfrequenz bis 100kHz betrieben werden. In einer vorteilhaften Weiterbildung ist außerdem durch entsprechende Ansteuerung der zum optischen Pumpen verwendeten Pumpdioden eine Formung der vom Faserlaser 1 erzeugten Pulse oder Pulszüge möglich. Die Steuerung des Faserlasers 1 erfolgt mit einer Steuereinheit 2.

Der mit einem gaußförmigen Querschnittsprofil vorliegende primäre Laserstrahl L₁ wird über eine bevorzugt polarisationserhaltende erste Transportfaser 3 und eine erste Kollimieroptik 4 in ein Frequenzvervielfacher-Modul 5 eingekoppelt, das einen zwischen einer Fokussieroptik 6a und einer zweiten Kollimieroptik 6b angeordneten nichtlinearen Kristall 7, beispielsweise KTP oder LBO umfasst. Die Transportfaser 3 ist kurz genug um eine in ihr durch nichtlineare optische Effekte verursachte Erhöhung der Bandbreite weitgehend zu vermeiden und diese auf Werte unter 1nm zu begrenzen. Bei der ersten Transportfaser 3 handelt es sich vorzugsweise um eine Large-core-singlemode- oder eine Niedermoden-Faser, deren Kerndurchmesser größer als 15µm ist.

Zur Temperaturstabilisierung des nichtlinearen Kristalls 7 dient eine Thermostateinrichtung 8. Zusätzlich wird mit einer Sensoreinrichtung 9 ein der Intensität des in das Frequenzvervielfacher-Modul 5 eingekoppelten primären Laserstrahls L₁ entsprechender Messwert gemessen und zur Kontrolle und Steuerung des Faserlasers 1 der Steuereinheit 2 zugeführt.

In einer alternativen Ausführung wird das Frequenzvervielfacher-Modul 5 ohne Zwischenschaltung einer ersten Transportfaser 3 direkt hinter den Ausgang des Faserlasers 1 montiert. Der aus dem Frequenzvervielfacher-Modul 5 austretende Laserstrahl L setzt sich aus dem verbleibenden (Frequenzvervielfachungs-Wirkungsgrad typisch < 50%) primären Laserstrahl L₁' mit der Frequenz ω und dem frequenzvervielfachten sekundären Laserstrahl L₂ mit den Frequenzen 2ω oder 3ω zusammen. Primärer Laserstrahl L₁' und sekundärer Laserstrahl L₂ werden über ein optisches Abgleichmodul 10 geleitet, mit dem das Intensitätsverhältnis zwischen dem verbliebenen primären Laserstrahl L₁' und dem sekundären Laserstrahl L₂ eingestellt werden kann. Das hierzu verwendete optische Abgleichmodul 10 ist beispielsweise ein als cut-off-Filter für den verbliebenen primären Laserstrahl L₁' dienendes Verlaufsfilter, dessen Durchlässigkeit für den primären Laserstrahl L₁' zwischen typisch 10-100% automatisch eingestellt werden kann. Dieses cut-off-Filter lässt zugleich den sekundären Laserstrahl L₂ durch. Die vom optischen Abgleichmodul 10 nicht durchgelassene, d.h. reflektierte primäre Laserstrahlung wird in einen Absorber 11 geführt.

In einer alternativen Ausführungsform umfasst das optische Abgleichmodul 10 ein wellenlängenselektives elektrooptisches oder akustooptisches Element, welches einstellbar einen Teil des verbliebenen primären Laserstrahls L₁' in den Absorber 11 leitet.

Der aus dem optischen Abgleichmodul 10 austretende und aus einem restlichen primären Laserstrahl L₁" und dem sekundären Laserstrahl L₂ zusammengesetzten Laserstrahl L wird über einen optischen polarisationsunabhängigen Isolator 13 und eine Fokussieroptik 14 in eine zu einem Bearbeitungskopf 15 führende zweite Transportfaser 16 eingekoppelt und aus dieser in eine im oder am Bearbeitungskopf 15 angeordnete Kollimatoreinrichtung 17, eine erste Strahlformungseinrichtung 18 und einen Zirkularpolarisator (λ/4-Platte) 12 ausgekoppelt.

Der optische Isolator 13 dient dazu, eine vom Werkstück reflektierte Laserstrahlung, bei der es sich hauptsächlich um reflektierte primäre Laserstrahlung handelt, soweit zu reduzieren, dass diese den Betrieb des Faserlasers 1 nicht beeinträchtigt.

Die zweite Transportfaser 16 ist eine Large-core-singlemode-Faser oder eine Niedermode-Faser, die einen Kerndurchmesser aufweist, der typisch größer als 15µm ist. Die Eigenschaften dieser Transportfaser 16 sind vorzugsweise so gewählt, dass an ihrem Ausgang - insbesondere beim restlichen primären Laserstrahl L₀" - aus dem ursprünglichen Gauß-Profil ein anderes Strahlprofil, z.B. ein Tophat- oder ein Doughnut-Profil entsteht.

In einer alternativen Ausführung bleibt in der Transportfaser 16 das ursprüngliche Strahlprofil erhalten und am Ausgang der zweiten Transportfaser 16 wird mit Hilfe der ersten Strahlformungseinrichtung 18 die Form des Intensitätsprofiles, beispielsweise ein Doughnut-Profil, ein Tophat-Profil oder ein anderes Gauß-Profil eingestellt um eine möglichst homogene Erwärmung der Bearbeitungszone zu gewährleisten.

Mit einer im Bearbeitungskopf 15 angeordneten zweiten Strahlformungseinrichtung 19 kann der Durchmesser des restlichen primären Laserstrahls L₁" und des sekundären Laserstrahls L₂ verändert werden. Die beiden Strahlformungseinrichtungen 18 und 19 können auch eine Einheit bilden.

Der auf diese Weise geformte Laserstrahl L (L₁" und L₂) gelangt über eine Ablenkoptik 20 zu einer Fokussieroptik 21, die den Laserstrahl L auf einem Werkstück 22 fokussiert. Die Ablenkoptik 20 umfasst sowohl eine Spiegelanordnung zur lateralen Strahlablenkung (parallel zur Werkstückoberfläche), beispielsweise ein 2D- oder ein 3D-Scanner, oder in einer alternativen, in der Fig. dargestellten Ausführungsform einen wellenlängenselektiven und räumlich selektiven fest eingebauten Umlenkspiegel 23, der einerseits den Laserstrahl L auf das Werkstück 22 leitet und andererseits die beim Laserbearbeiten des Werkstückes 22 auftretenden axialen, d.h. entgegen der Richtung des auf das Werkstück 22 auftreffenden Laserstrahls L von der Schweißstelle ausgehende Strahlung Rₐ durchlässt. Deren Intensität wird nach Durchtritt durch den wellenlängenselektiven und räumlich selektiven Umlenkspiegel 23 mit einem Sensor 24 erfasst. Die räumlich selektive Eigenschaft des Umlenkspiegels 23 besteht darin, dass er nur in einem begrenzten Bereich für die Wellenlängen des Laserstrahls L reflektierend ist, während er außerhalb dieses Bereiches durchlässig ist. Hierbei wird ausgenutzt, dass die Apertur der vom Werkstück 22 ausgehenden Strahlung Rₐ grösser ist als die Apertur des Laserstrahls L auf dem Umlenkspiegel 23, so dass er nur in diesem Bereich reflektierend sein muss. Umlenkspiegel 23 und Sensor 24 bilden auf diese Weise eine Einrichtung zum Auskoppeln und Detektieren der vom Werkstück 22 axial ausgehenden Strahlung.

In einem weiteren Sensor 25 wird zusätzlich eine von der Bearbeitungsstelle ausgehendes nichtaxiales optische Strahlung Rₙₐ unmittelbar erfasst. Die von den Sensoren 24, 25 erfassten Messsignale werden einer Signalverarbeitungseinheit 26 zugeleitet. In der Signalverarbeitungseinheit 26 werden aus den Messsignalen Steuersignale für die den Faserlaser 1 steuernde Steuereinheit 2 generiert.

Alternativ zu der gezeigten Ausführung können die optischen Signale R_{a,na} auch zuerst in Lichtleitfasern eingekoppelt und zu der Signalverarbeitungseinheit 26 transportiert werden, in der dann die Sensoren 24, 25 integriert sind.

Mit Hilfe der von den Sensoren 24, 25 erzeugten Messsignale ist es möglich, den Bearbeitungsvorgang zu überwachen und über die Signalverarbeitungseinheit 26 den Bearbeitungsprozess zu steuern.

In einer besonders vorteilhaften Variante umfasst die feste oder bewegliche Ablenkoptik 20 keinen wellenlängenselektiven und räumlich selektiven Umlenkspiegel 23, sodass die von der Bearbeitungsstelle in axialer Richtung ausgehenden Strahlung, wie z.B. die reflektierten Laserstrahlen, die Plasmastrahlung oder die Wärmestrahlung wieder in den Kern und Mantel der Transportfaser 15 eingekoppelt werden. In dieser Ausführungsform wird die vom Werkstück 22 zurückkommende Strahlung mit einem faseroptischen Strahlteiler 27 in der Transportfaser 15 ausgekoppelt und in der Signalverarbeitungseinheit 26 weiter analysiert.

In der Figur ist außerdem ein Monitor 28 veranschaulicht, auf dem ein Puls 29a der der von der Bearbeitungsstelle ausgehenden Strahlung dargestellt ist. Aus der Form eines solchen Pulses 29a kann beispielsweise Information über das dynamische Absorptionsverhalten der Bearbeitungsstelle während der Pulsdauer abgeleitet werden da die Absorption bei Metallen temperaturabhängig ist. Diese Information kann dann zur Steuerung des Bearbeitungsprozesses verwendet werden.

In der Fig. ist außerdem ein Pulszug 29b dargestellt, der ebenfalls auf dem Monitor 28 wiedergegeben werden kann. Aus dem Relativ-Verhalten der Pulse 29a eines solchen Pulszugs 29b können lokale Veränderungen am Werkstück 22 detektiert werden, sei es eine Veränderung der Oberfläche oder auch eine geometrische Veränderung während der Bearbeitung an dem Werkstück. Dies können beispielsweise beim Schweißen Schweißdefekte wie Spritzer auf der Schweißstelle oder auch ungewollte Löcher sein. Diese Analysemöglichkeit hilft umgekehrt auch beim Erkennen von erfolgreichem Laserstrahl-Bohren und -Schneiden.

In einer anderen Ausführung kann - bei entferntem optischen Isolator 13 die in die zweite Transportfaser 16 rückgekoppelte Strahlung auch an der laserseitigen Transportfaser 3 oder auch im Faserlaser 1 selbst über faseroptische Strahlteiler abgegriffen werden und der Analyse und Prozesssteuerung zugeführt werden.

Die erfindungsgemäße Anordnung ist insbesondere geeignet zum Laserbearbeiten von Kupfer, Aluminium oder anderen hochreflektierten Materialien in der Elektronik-, Medizin- oder Schmuckindustrie.

Obwohl die Erfindung im Detail durch das bevorzugte Ausführungsbeispiel näher illustriert und beschrieben wurde, ist diese nicht durch die offenbarten Beispiele eingeschränkt und andere Variationen können vom Fachmann hieraus abgeleitet werden, ohne den Schutzumfang der Erfindung, wie durch die Ansprüche definiert, zu verlassen.

## Patentansprüche

1. Anordnung zum Bearbeiten eines Werkstückes (22) mit einem Laserstrahl (L), insbesondere zum Bearbeiten hochreflektierender Werkstücke, mit einem Faserlaser (1) als Laserstrahlquelle zum Erzeugen eines gepulsten primären Laserstrahls (L₁) mit einer Bandbreite, die kleiner als 1nm ist, **dadurch gekennzeichnet, dass** eine Einrichtung zum Auskoppeln und Detektieren einer vom Werkstück (22) axial ausgehenden Strahlung vorgesehen ist, wobei die vom Werkstück (22) axial ausgehende Strahlung (Rₐ) über einen faseroptischen Strahlteiler (27) aus einer Transportfaser (3,16) ausgekoppelt wird oder die Anordnung einen Bearbeitungskopf (15), der eine Kollimatoreinrichtung (17), eine Ablenkoptik (20) und eine Fokussieroptik (21) zum Fokussieren der Laserstrahlen (L₁",L₂)auf das Werkstück (22) umfasst, wobei die Ablenkoptik (20) einen Umlenkspiegel (23) umfasst, der schmalbandig hochreflektierend für den primären und den oder die sekundären Laserstrahlen ist und der für eine vom Werkstück ausgehende Plasma- und Wärmestrahlung durchlässig ist.

2. Anordnung nach Anspruch 1, bei der der primäre Laserstrahl (L₁) linearpolarisiert ist.

3. Anordnung nach Anspruch 1 oder 2, bei der Faserlaser (1) Single-Mode- oder ein Niedermoden-Faserlaser ist.

4. Anordnung nach Anspruch 1, 2 oder 3, bei der der Faserlaser (1) ein qcw-Faserlaser ist.

5. Anordnung nach einem der vorhergehenden Ansprüche, bei der im Strahlengang des primären Laserstrahls (L₁) ein Frequenzvervielfacher-Modul (5) zum Erzeugen eines frequenzvervielfachten sekundären Laserstrahls (L₂) angeordnet ist.

6. Anordnung nach Anspruch 5, bei der im Strahlengang der aus dem Frequenzvervielfacher-Modul (5) austretenden Laserstrahlen (L₁', L₂) ein optisches Abgleichmodul (10) angeordnet ist, mit dem die Intensität des primären Laserstrahls (L₁") relativ zur Intensität des sekundären Laserstrahles (L₂) einstellbar ist.

7. Anordnung nach einem der vorhergehenden Ansprüche in Verbindung mit Anspruch 3, mit einer oder einer Mehrzahl von Transportfasern (3,16) zum Führen der Laserstrahlen (L₁,L₁',L₁",L₂), wobei alle Transportfasern (3,16) einen Kerndurchmesser aufweisen, der größer als 15µm ist.

8. Anordnung nach einem der vorhergehenden Ansprüche 5 - 7, bei der dem Frequenzvervielfacher-Modul (5) ein Zirkularpolarisator (12) nachgeschaltet ist.

9. Anordnung nach einem der vorhergehenden Ansprüche, bei der die im Strahlengang der Laserstrahlen (L₁",L₂) befindlichen optischen Komponenten aus Quarzglas bestehen.

10. Anordnung nach einem der Ansprüche 1 bis 9, mit einer Signalverarbeitungseinheit (26), in der die Veränderung der Pulsform und/oder der Pulszüge und der zeitlicher Verlauf der vom Werkstück (22) während der Bearbeitung ausgehenden Strahlung (Rₐ,Rₙₐ)analysiert und auf der Grundlage dieser Analyse Steuersignale zur Steuerung des Bearbeitungsprozesses erzeugt werden.

## Claims

1. Arrangement for processing a workpiece (22) by means of a laser beam (L), in particular for processing highly reflective workpieces, having a fibre laser (1) as a laser beam source for generating a pulsed primary laser beam (L₁) having a range which is smaller than 1nm, **characterised in that** a device for decoupling and detecting a radiation axially originating from the workpiece (22) is provided, wherein the radiation (Rₐ) axially originating from the workpiece (22) is decoupled from a transport fibre (3, 16) via a fibre-optic beam splitter (27), or the arrangement a processing head (15), which comprises a collimator device (17), deflecting optics (20) and focussing optics (21) for focussing the laser beams (L₁", L₂) on the workpiece (22), wherein the deflecting optics (20) comprise a deflection mirror (23), which is narrow-band highly reflective for the primary and the or the secondary laser beams and which is permeable for a plasma- and heat-radiation originating from the workpiece.

2. Arrangement according to claim 1, in which the primary laser beam (L₁) is linearly polarised.

3. Arrangement according to claim 1 or 2, in which the fibre laser (1) is a single-mode or a low-mode fibre laser.

4. Arrangement according to claim 1, 2 or 3, in which the fibre laser (1) is a QCW fibre laser.

5. Arrangement according to one of the preceding claims, in which a frequency multiplier module (5) for generating a frequency-multiplied secondary laser beam (L₂) is arranged in the beam path of the primary laser beam (L₁).

6. Arrangement according to claim 5, in which an optical comparison module (10) is arranged in the beam path of the laser beams (L₁', L₂) originating from the frequency multiplier module (5), with which optical comparison module the intensity of the primary laser (L₁") can be adjusted relative to the intensity of the secondary laser beam (L₂).

7. Arrangement according to one of the preceding claims in connection with claim 3, having one or a plurality of transport fibres (3, 16) to guide the laser beams (L₁, L₁', L₁", L₂), wherein all transport fibres (3, 16) have a core diameter greater than 15µm.

8. Arrangement according to one of the preceding claims 5-7, in which a circular polariser (12) is downstream of the frequency multiplier module (5).

9. Arrangement according to one of the preceding claims, in which the optical components located in the beam path of the laser beams (L₁", L₂) consist of quartz glass.

10. Arrangement according to one of claims 1 to 9, having a signal processing unit (26), in which the change of the pulse shape and/or the pulse trains and the time course of the radiation (Rₐ, Rₙₐ) originating from the workpiece (22) during the processing are analysed and, based on this analysis, control signals to control the processing process are generated.

## Revendications

1. Système d'usinage d'une pièce (22) par un rayon (L) laser, notamment d'usinage de pièces très réfléchissantes, comprenant un laser (1) à fibre comme source de rayon laser pour la production d'un rayon (L₁) laser primaire pulsé d'une largeur de bande plus petite que 1nm, **caractérisé en ce qu'**il est prévu un dispositif d'extraction et de détection d'un rayonnement issu axialement de la pièce (22), dans lequel le rayonnement (Rₐ) issu axialement de la pièce (22) est extrait d'une fibre (3, 16) de transport par un diviseur (27) de faisceau à optique de fibre ou le système a une tête (15) d'usinage, qui comprend un dispositif (17) de collimation, une optique (20) de déviation et une optique (21) de focalisation pour focaliser les rayons (L₁", L₂) laser sur la pièce (22), l'optique (20) de déviation comprenant un miroir (23) de déviation qui est très réfléchissant en bande étroite du rayon laser primaire et du ou des rayon(s) laser secondaire(s) et qui est transparent au rayonnement de plasma et de chaleur issus de la pièce.

2. Système suivant la revendication 1 dans lequel le rayon (L₁) laser primaire est polarisé linéairement.

3. Système suivant la revendication 1 ou 2 dans lequel le laser (1) à fibre est un laser à fibre à mode unique ou à bas modes.

4. Système suivant la revendication 1, 2 ou 3, dans lequel le laser (1) à fibre est un laser à fibre qcw.

5. Système suivant l'une des revendications précédentes, dans lequel dans le trajet du rayon (L₁) laser primaire est monté un module (5) multiplicateur de fréquence pour la production d'un rayon (L₂) laser secondaire multiplié en fréquence.

6. Système suivant la revendication 5, dans lequel dans le trajet des rayons (L₁', L₂) laser sortant du module (5) multiplicateur de fréquence est monté un module (10) d'équilibrage optique, par lequel l'intensité du rayon (L₁") laser primaire par rapport à l'intensité du rayon (L₂) laser secondaire peut être réglée.

7. Système suivant l'une des revendications précédentes en liaison avec la revendication 3, comprenant une ou une pluralité de fibres (3, 16) de transport pour le guidage des rayons (L₁, L₁', L₁", L₂) laser, toutes les fibres (3, 16) de transport ayant un diamètre de cœur plus grand que 15µm.

8. Système suivant l'une des revendications 5 à 7 précédentes, dans lequel un polariseur (12) circulaire est monté en aval du module (5) multiplicateur de fréquence.

9. Système suivant l'une des revendications précédentes, dans lequel des composants optiques se trouvant dans le trajet des rayons (L₁", L₂) laser sont en verre au quartz.

10. Système suivant l'une des revendications 1 à 9, comprenant une unité (26) de traitement du signal, dans laquelle la variation de la forme de l'impulsion et/ou des trains d'impulsions et la courbe en fonction du temps du rayonnement (Rₐ, Rₙₐ) issu de la pièce pendant l'usinage sont analysées et, sur la base de cette analyse, des signaux de commande sont produits pour commander le processus d'usinage.
